Europäisches Patentamt

European Patent Office

Office européen des brevets

(11) Publication number: **0 404 554 A2**

# EUROPEAN PATENT APPLICATION

(21) Application number: **90306767.6**

(22) Date of filing: **20.06.90**

(51) Int. Cl.5: **H02J 7/10**

(30) Priority: **20.06.89 GB 8914129**

(43) Date of publication of application:
**27.12.90 Bulletin 90/52**

(84) Designated Contracting States:
**AT BE DE DK ES FR GB IT LU NL SE**

(71) Applicant: **CASS GROUP PUBLIC LIMITED COMPANY**
**Delta Way Thorpe Industrial Estate**
**Egham Surrey TW20 8RN(GB)**

(72) Inventor: **Julier, Trevor Leonard**
**15 Waverley Close**
**Odiham, Hampshire RG25 1AT(GB)**
Inventor: **Atamian, Hagop Jack**
**5 Catharine Court**
**Page Hill, Buckingham MD18 1UG(GB)**

(74) Representative: **Loughrey, Richard Vivian Patrick et al**
**HUGHES CLARK & CO PO BOX 22, 63**
**Lincoln's Inn Fields**
**London WC2A 3JU(GB)**

(54) Charging system.

(57) A system for charging of a battery for powering equipment is disclosed in which the duration charging the battery at a boost current rate is controlled in dependence upon the usage of the equipment. During periods of use of the equipment a count is registered corresponding to periods of use for different operations which draw different currents from the battery. The boost charging is controlled in dependence upon the count and the count is decremented as the boost charging takes place.

FIG.3.

EP 0 404 554 A2

This invention relates to recharging of batteries used to power equipment and in particular batteries used to power portable equipment which can be utilised to carry out a number of different functions which draw different amounts of charge from the battery.

In order to reduce the period for which the equipment is not available for use while the battery is being recharged, the battery may be charged at a high boost charge current. However if the boost charge current is applied for too long a period the battery may suffer irreparable damage and have a shorter operational life.

According to the invention a charging system includes equipment powered by rechargeable battery, said equipment including means operative to register usage of the equipment; and means operative to control charging of the battery at a boost current rate in dependence upon the registered usage of the unit.

The equipment may be a portable unit and may include a microprocessor to maintain a record of usage of the equipment and to control charging at the boost current rate in dependence upon said record of usage.

An embodiment of the invention will now be described in relation to a portable respond unit for use in a communication system with reference by way of example to the drawings in which:-

Figure 1 is a block diagram of a call unit communication system,

Figure 2 is a circuit diagram of circuits of a call unit, and

Figure 3 is a block circuit diagram of a portable respond unit.

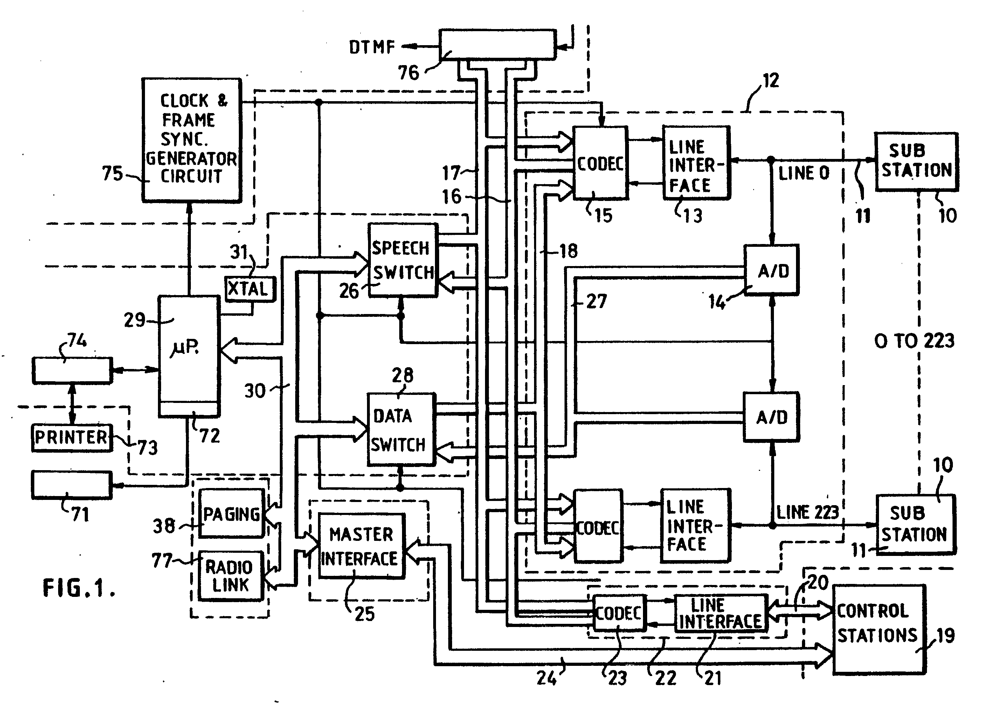

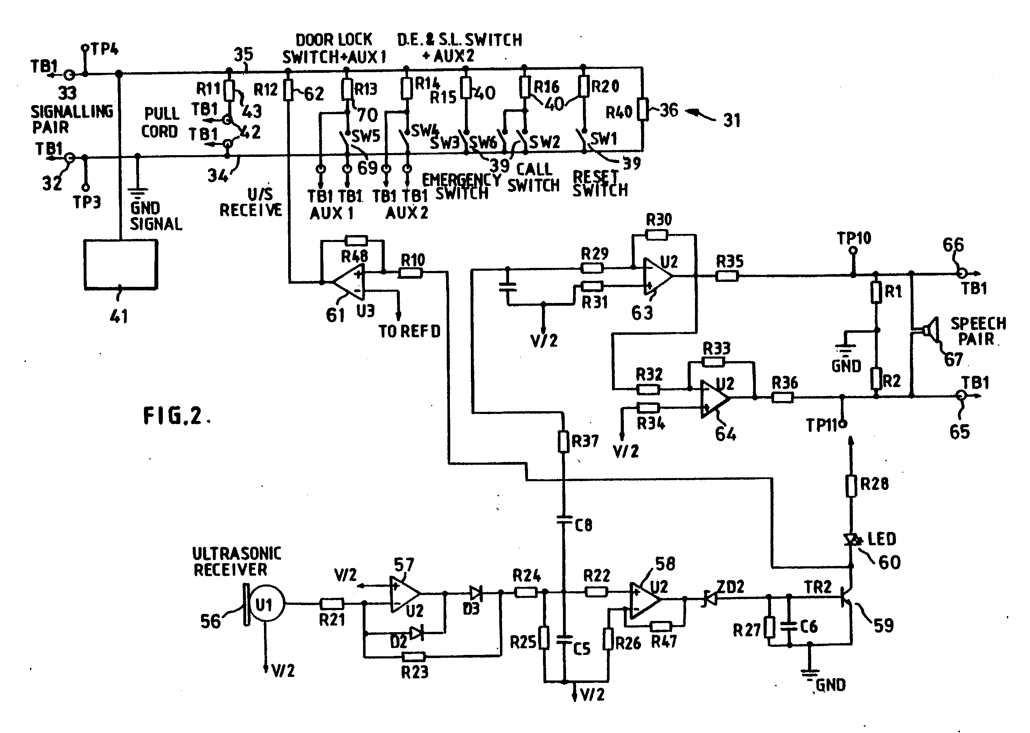

Referring first to Figure 1, a plurality of call units or sub-stations 10 are each connected by lines 11 each comprising a pair of speech conductors, for carrying speech frequency signals, and a pair of signalling conductors, for carrying control or data signals, to line circuits on circuit cards in a linecard unit 12. In the specific embodiment described herein, there may be up to 224 sub-stations connected bY lines 11 numbered '0' to '223' and line circuits for six lines may be provided on each circuit board in the linecard unit 12. However if desired the system may be designed to accommodate other numbers of sub-stations. The circuits of the sub-stations will be described hereinafter with reference to Figure 2.

The line circuit for each sub-station comprises a line interface circuit 13 connected to the pair of speech conductors and to the pair of signalling conductors of the line 11. In addition an analogue to digital converter 14 is connected to the pair of signalling conductors to convert an analogue voltage level on the conductors to a digital data signal. The line interface circuit is connected to a CODEC 15 operative to convert analogue speech frequency signals, received from a sub-station 10 by the line interface circuit 13, to digital signals which are output onto a first bus 16. The CODEC 15 is also operative to convert digital signals received from a second bus 17 and a third bus 18 to analogue speech frequency signals for output to the sub-station 10 via line interface circuit 13 and the speech pair and signalling pair of conductors respectively of line 11.

One or more control stations 19 are connected by pairs of speech conductors 20 to line interface circuits 21 in a control station linecard unit 22, an interface circuit being provided for each control stations Each interface circuit 21 is connected to bus 16 and bus 17 by means of a CODEC 23. The control stations 19 are connected by pairs of signal conductors 24 to a master interface 25.

Digital signals input onto the bus 16 by any of the CODECs 15, 23 are input to a speech switch 26 and digital signals from the speech switch 26 are output to the bus 17 for input to the CODECs 15, 23. Digital signals from the analogue to digital converters 14 are connected by a fourth bus 27 to an input of a data switch 28 and digital signals from the data switch 28 are output to the bus 18 for input to the CODECs 15.

Operation of the speech switch 26 and of the data switch 28 is controlled by means of a microprocessor 29 connected to the speech switch and the data switch by a fifth bus 30. The microprocessor operates with a clock frequency regulated by a crystal 31. The fifth bus 30 is also connected to the master interface 25 to permit control signals from the control stations 19 to be input to the micro-processor 29 and to convey data signals from the micro-processor to the control stations. A radio paging transmitter 38 is also connected to the bus 30 in order to transmit data signals from the micro-processor 29.

Referring now to Figure 2, each sub-station, or room call unit, is provided with a control circuit 31 which is connected by terminals 32, 33 to the signalling conductor pair for that respective units The control circuit includes a ground conductor 34 connected to the terminal 32 and a conductor 35 connected to the terminal 33. The conductor 35 is connected to the ground conductor 34 through a resistor 36 and the line interface circuit 13 supplies current to the conductor 35 via the signalling conductor pair. Under normal conditions when the control circuit has not been operated, the conduotor 35 is maintained at a voltage level determined by the resistor 36. The sub-station is provided with a set of key buttons to enable a person to signal, for example, an emergency call, a non-emergency call and to signal cancellation of the previously signalled call. These key buttons operate switches 39 connected in series with resistors 40 of different impedances. Accordingly operation of a selected one of the key switches 39 connects the resistor 40 corresponding thereto between the conductors 34, 35 in parallel with the resistor 36. As a result the voltage level of the conductor 35 is changed in dependence upon which one of the key switches 39 has been operated. The voltage level of the conductor 35 is converted to a digital signal by the analogue to digital converter 14 and input to the data switch 28. The micro-processor 29 cyclically tests the digital signals received by the data switch from the analogue to digital converters 14 associated with all the sub-stations and if any of the digital signals represents a voltage level different from the normal unoperated condition of the control circuit, the micro-processor registers that a key switch of an identified one of the sub-stations has been operated and detects which of the set of key switches of that sub-station has been operated by the value of the digital signal, which corresponds to the voltage level of the conductor 35 of the control circuit. When the micro-processor 29 detects that the voltage level of the conductor 35 has changed from its normal level due to operation of one of the key switches of that sub-station, an acknowledgement signal is transmitted back on the signalling pair and is detected by an acknowledgement indicator circuit 41 to operate an indicator which may be both visual and audible. In addition to the key operated switches 39 a pull switch, having a pendant operating cord for use by a person unable reach the sub-station unit, may be connected to terminals 42 in series with a resistor 43 between the conductors 34, 35.

Each substation 10 is provided with means to respond to the modulated ultra-sonic carrier produced in a portable respond control unit described hereinafter. In the present embodiment the ultra-sonic carrier is modulated by double tone multi-frequency (DTMF) signals corresponding to operation of different ones of a set of keys on the portable respond unit. An ultra-sonic receiver transducer 56 is located on the sub-station unit in a position such that it can receive the modulated carrier transmitted from a portable respond unit when the latter is located in the same dwelling room as the sub-station in proximity to the sub-station unit. The output of the receiver 56 is detected by peak detector 57 and applied to amplifier circuit 58 to drive a transistor 59 from a normally non-conductive state to a conductive state. When the transistor 59 is conductive, an LED 60 connected in series with the collector of the transistor 59 is energised and lights to indicate that the sub-station is receiving the modulated ultra-sonic carrier. The collector of the transistor 59 is also connected to an input of amplifier 61. The output of amplifier 61 is connected in series with a resistor 62 to the conductor 35 of the control circuit 31 of the sub-station. When the transistor 59 is rendered conductive as a result of the sub-station receiving the modulated ultra-sonic carrier from the portable respond unit, the output of the amplifier 61 is driven to ground potential and hence the resistor 62 is connected between the conductors 34 and 35. The impedance of the resistor 62 is chosen such that, on receipt of the modulated ultra-sonic carrier, the conductor 35 attains a voltage level different from the voltage levels due to operation of any of the key switches 39. Accordingly, when the micro-processor 29 tests the digital signal corresponding to the voltage level of conductor 35, the micro-processor detects that a portable respond unit is in communication with an identified one of the sub-stations. The DTMF output of peak detector 57 is also applied to an amplifier pair 63, 64 to produce a balanced output applied to the speech line pair connected to terminals 65, 66. A loudspeaker 67 is connected across the terminals 65, 66 to transduce speech signals received from the speech conductor pair and to provide audible indication of the operation of keys on the portable respond unit.

When the micro-processor 29 responds to a digital signal from the analogue to digital converter 14 associated with a sub-station it generates a message signal which is transmitted by the signalling conductors 24 to the control stations 19. This message signal includes information identifying that one of the sub-stations from which the call originated and the status of the call, i.e. emergency or non-emergency. Each control station includes a microprocessor which receives the message signal and displays the information on a visual display device. Each control station includes a keyboard to control the micro-processor thereof to send control signals via the master interface to the micro-processor 29. When a key to accept a call on one of the control stations is operated, a signal is sent to the micro-processor 29 to operate the speech switch 26 to route speech signals between that control station and that one of the sub-stations which originated the call and thereby establish voice communication therebetween. If more than one sub-station originates calls, micro-processor 29 generates message signals for each call as it is originated and transmits corresponding message signals to the control station. The message signals are stored in a stack in order of priority and in order of occurrence within each priority. The highest priority messages awaiting action are displayed one at a time and to enable an operator to accept a selected one of the calls, usually the call having highest priority, i.e. the first received emergency call.

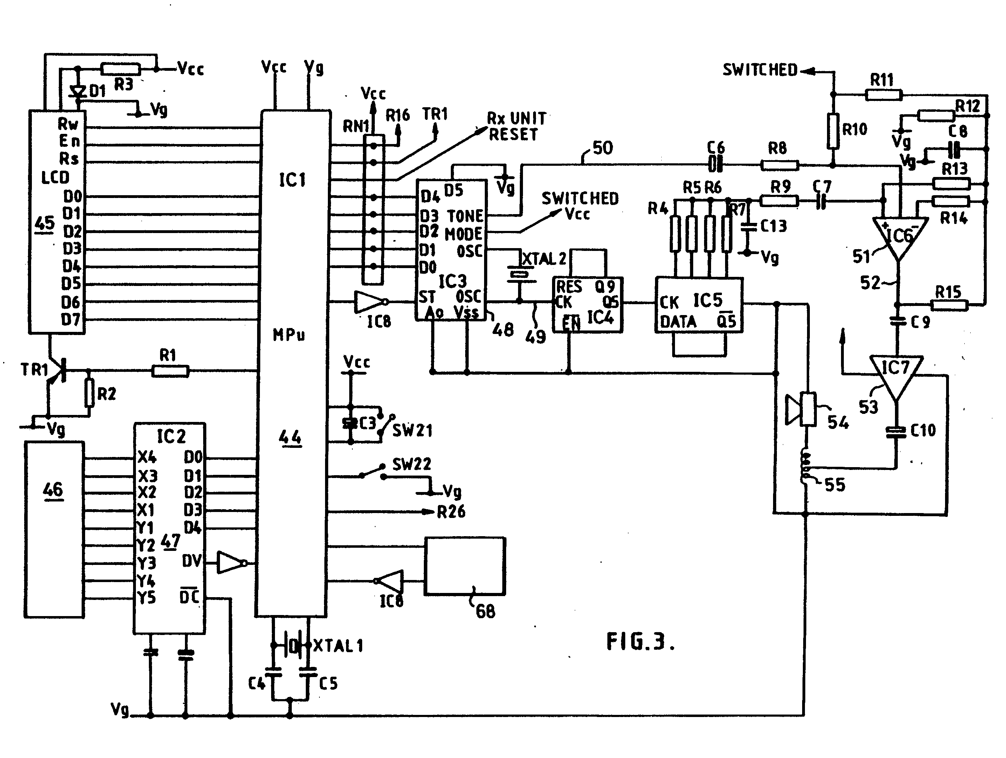

It will be appreciated that the sub-stations 10 are located in the different dwellings of the sheltered accommodation whereas the control stations are located, for example, in an office or offices of one or more wardens. Accordingly calls originating from the sub-stations can only be accepted and communication therewith established from the location of the office or offices. In order to permit a warden to accept a call from a sub-station while visiting a dwelling in which another sub-station is located, each warden is provided with a portable respond control unit, the circuit of which is shown in Figure 3. The portable respond control unit includes a micro-processor 44 which is connected to drive an LCD display device 45 and is controlled by means of manual operation of a keyboard 46, the keyboard 46 being coupled to the micro-processor by an encoder 47. An oscillator and tone generator 48 is operable to generate an ultra-sonic frequency carrier on output 49 and to generate a selected one of a number of tone signals on output 50, in the present example the tone signals are DTMF signals. The ultra-sonic carrier is amplified and input to a modulator 51. The tone signal output 50 is applied to a modulating input of modulator 51 to produce a modulated ultra-sonic carrier signal at 52 which is amplified by amplifier 53 and drives a transmitter transducer 54 by means of a transformer 55.

A radio paging receiver 68 is responsive to radio signals transmitted by the radio paging transmitter 38 and the output of the receiver is applied as an input to the micro-processor 44 of the portable respond control unit. Messages output by the micro-processor 29 onto the bus 30 input to the radio paging transmitter 38 for reception by the radio paging receivers 68 of portable respond control units. These messages are displayed on the display devices 45 of the portable respond control units, only those messages having the highest priority of any messages awaiting action are displayed in a rolling display.

By utilising digital signals for conveying speech and information, digital switches are employed for routing the digital signals and this enables the system to handle a plurality of communication channels for both speech and data simultaneously. As a result more than one portable respond control unit is able to be used at different locations at the same time whereby a plurality of calls may be actioned independently by several wardens.

The availability of more than one channel of communication at any time permits the combination of a door entry system with the call unit communication system without detracting from the handling of emergency calls of highest priority. A sub-station is located adjacent the entry door to be controlled and this sub-station is provided with means to enable a user to initiate communication with a selected one of the sub-stations 10. After communication has been established and the resident wishes to permit entry, a door lock switch 69, connected in series with a resistor 70 between the conductors 34, 35 of the control circuit of the sub-station, is operated by the resident. The resulting voltage level is detected by the micro-processor 29, as described in relation to operation of the call switches 39, and the micro-processor transmits a signal to a lock mechanism to unlock the door and permit entry.

The communication system hereinbefore described may be connected with a telephone network (PSTN) by means of a an interface unit 71 connected to the micro-processor 29 by a serial interface 72. A log of all calls actioned by the micro-processor 29 may be recorded by means of a printer 73 connected to the micro-processor by means of an interface 74. A clock and frame synchronising circuit 75 is driven by the micro-processor 29 to provide timing signals to the speech switch 26, the data switch 28 and the CODECs 15. A tone generator 76 connected to the buses 16 and 17 is provided to generate and supply tone signals for use in the operation of the communication system. These tone signals include DTMF signals where DTMF signals are used for signalling purposes. When required, a radio receiver 77 connected to bus 30 is provided to receive emergency signals transmitted from radio transmitters housed in pendants which may be worn by residents and operated in the event of an emergency without need to use the sub-station.

The portable respond control units are powered by means of rechargeable batteries. These batteries provide an operating time for the unit in excess of 12 hours and in order to reduce the time for which the units are not available for normal portable use, the batteries are charged at the start of every charging at a high boost charge current and after a predetermined time the charge current is reduced to a trickle charge rate. However if the boost charge current is applied for too long a period the battery may suffer irreparable damage and have a shorter operational life. The micro-processor 44 of the portable unit maintains a count representing usage of the unit, each type of operation of the unit being allocated a count value per time period corresponding approximately to the current requirement of the unit for the operation. When the unit is connected to a charger to charge the battery, the micro-processor utilises the count representing usage of the unit to control the period for which the boost charge current is applied to the battery and reduces the count as the boost charging proceeds. When the count has reduced to a predetermined low value, for example zero, the charging current is reduced to a trickle charge current. However if the unit needs to be removed from charge prior to completion of charging at the boost charge rate, the count remaining is retained and incremented as before by further use of the unit. An indicator is provided to indicate to a user when the battery is in need of recharging. The LCD display device of the unit is provided with a light to ensure that the display is visible in low ambient light levels. The light may be illuminated bY operation of a key switch and, in order to economise on current consumption and consequent discharge of the battery, the light is automatically turned off under control of the micro-processor 44 after a predetermined short interval.

The control stations and portable respond control units provide similar facilities to the wardens. When a call is initiated by operation of a key switch 39 of a sub-station, the message transmitted by the micro-processor 29 to the control station or respond unit will cause the display thereof to display room number and the call initiation method, i.e. priority of the call. Only the highest priority call present will be displayed, or if there is more than one call of this priority, they will be rolled over on the display. When one of these calls has been accepted by operating a CALL ACCEPT key during display of a selected call message or during a following blank display period, speech communication between the control station, or the sub-station receiving ultra-sonic carrier from the portable unit, and the selected sub-station which initiated a call is established by operation of the speech switch by the micro-processor 29 and the call is cancelled from the calls awaiting action. While the control station or substation is in communication mode, the display of the control station or portable unit indicates the number of calls awaiting attention.

A communication may be initiated by a warden from the control station or from a sub-station receiving ultra-sonic carrier from a portable unit. The sub-station or portable unit keyboard is utilised to select a required one of the other sub-stations to which the communication is to be routed. When required a communication may be made to a group of sub-stations or to all substations simultaneously. Speech direction is controlled by a speak/listen button control on the control station or portable unit.

It will be understood that transmission of messages from the micro-processor 29 to the portable respond control units is effected by means of radio transmission by the radio paging transmitter. Detection of the location of a portable unit is effected by means of the sub-station 10 receiving ultra-sonic carrier and then sending a signal via the signalling conductor pair to the micro-processor 29 indicating presence of the portable unit. Control signals for handling calls and communications, including acceptance of a call and initiating a communication with a sub-station, control station or to the external PSTN are carried from the portable unit to the adjacent sub-station as modulation of the ultra-sonic carrier. These control signals are tones and are carried by the speech conductor pair and converted to digital signals by the CODEC 15. On receipt of the digital control signals at the speech switch, they are routed to the micro-processor 29 to control and route s subsequent speech communication between the adjacent sub-station and a defined destination.

While ultra-sonic carrier is the preferred method of conveying control signals from the portable unit to an adjacent sub-station, other radiation signals such as infra-red may be used as carriers. Conveniently the control signals are double tone multi-frequency signals, other tones of suitable frequency for transmission along the speech conductor pairs may be used.

## Claims

1. A charging system including equipment powered by rechargeable battery is characterised in that the eguipment includes means (44) operative to register usage of the equipment; and means (44) operative to control charging of the battery at a boost current rate in dependence upon the registered usage of the unit.

2. A charging system as claimed in claim 1 further characterised in that the equipment includes a microprocessor (44) to maintain a record of usage of the equipment and to control charging at the boost current rate in dependence upon said record of usage.

3. A charging system as claimed in claim 1 further characterised in that the equipment is operable in different modes of operation which draw different magnitudes of current from the battery and in that the means (44) registers a count dependent upon periods of use of the equipment in said respective different modes of operation.

4. A charging system as claimed in claim 2 further characterised in that the equipment is operable in different modes of operation which draw different magnitudes of current from the battery and in that the microprocessor (44) registers a count dependent upon periods of use of the eguipment in said respective different modes of operation.

5. A charging system as claimed in claim 3 or 4 further characterised in that during charging of the battery at the boost rate, the count is decremented to represent a period remaining for charging at the boost rate.

6. A portable unit powered by rechargeable battery characterised by means (44) operative to register usage of the unit; and means operative to control charging of the battery at a boost current rate in dependence upon the registered usage of the unit.

7. A portable unit as claimed in claim 6 further characterised in that the unit is operable in different modes of operation which draw different currents from the battery and in which the means (44) registers a count dependent upon periods of use of the unit in said different modes of operation.

8. A portable unit as claimed in claim 7 further characterised in that during charging of the battery at the boost rate, the count is decremented to represent a period remaining for charging at the boost rate.

FIG.1.

FIG.2.

EP 0 404 554 A2

FIG.3.